# FASCICULE DE BREVET EUROPEEN

(11) **EP 3 648 207 B1**
(45) Date de publication et mention de la délivrance du brevet: **27.01.2021**
(21) Numéro de dépôt: 19203423.9
(22) Date de dépôt: 15.10.2019
(51) Int. Cl.: H01M 4/134, H01M 4/40, H01M 10/052, H01M 4/86, H01M 10/0569, H01M 4/90, H01M 6/16, H01M 12/04, H01M 12/08, H01M 4/02

(54) **GÉNÉRATEUR ÉLECTROCHIMIQUE AU LITHIUM DU TYPE LITHIUM-OXYGÈNE OU LITHIUM-AIR COMPRENANT UN MATÉRIAU D'ÉLECTRODE NÉGATIVE SPÉCIFIQUE**
ELEKTROCHEMISCHER GENERATOR AUF LITHIUMBASIS VOM TYP LITHIUM-SAUERSTOFF ODER LITHIUM-LUFT, DER EIN SPEZIFISCHES NEGATIVES ELEKTRODENMATERIAL UMFASST
LITHIUM-OXYGEN OR LITHIUM-AIR ELECTROCHEMICAL GENERATOR COMPRISING A SPECIFIC NEGATIVE ELECTRODE MATERIAL

(30) Priorité: 29.10.2018 FR 1860013
(43) Date de publication de la demande: 06.05.2020
(73) Titulaire: Commissariat à l'énergie atomique et aux énergies alternatives, 75015 Paris (FR)
(72) Inventeur: CHAVILLON, Benoît, 38054 GRENOBLE CEDEX 09 (FR); INVERNIZZI, Ronan, 38054 GRENOBLE CEDEX 09 (FR); MAYOUSSE, Eric, 38054 GRENOBLE CEDEX 09 (FR)
(74) Mandataire: Brevalex

(56) Documents cités:
- US-A1- 2010 156 353
- US-A1- 2013 224 569
- KEISTER P ET AL: "PERFORMANCE OF LITHIUM ALLOY/LITHIUM AND CALCIUM/LITHIUM ANODES IN THIONYL CHLORIDE CELLS", JOURNAL OF POWER SOURCES, ELSEVIER SA, CH, vol. 15, no. 4, 15 août 1985 (1985-08-15), pages 239-244, XP001271109, ISSN: 0378-7753

## Description

### DOMAINE TECHNIQUE

La présente invention a trait à un générateur électrochimique au lithium du type lithium-oxygène ou lithium-air comprenant, au sein d'une cellule, un matériau d'électrode négative spécifique qui présente des propriétés électrochimiques efficaces tout en pouvant présentant une épaisseur d'électrode plus fine qu'une électrode comprenant uniquement du lithium métallique et présentant ainsi un intérêt tout particulier pour les applications de puissance.

Ce générateur peut être un générateur électrochimique primaire (ou pile), lorsqu'il n'est pas rechargeable ou un générateur électrochimique secondaire (soit en d'autres termes un accumulateur) lorsqu'il est rechargeable.

Le domaine de l'invention peut être défini comme celui des dispositifs de stockage d'énergie, en particulier celui des générateurs électrochimiques du type lithium-air ou lithium-oxygène.

### ETAT DE LA TECHNIQUE ANTERIEURE

Le document US 2013/224569 A1 (SAKAI HIROSHI [JP] ET AL) (2013-08-29) divulgue:
une batterie métal-air, pour laquelle un alliage de lithium et de calcium peut être sélectionné comme matériau d'anode.

Les documents US 2010/156353 A1 (IYER SUBRAMANIAN [US] ET AL) (2010-06-24) et KEISTER P ET AL: "PERFORMANCE OF LITHIUM ALLOY/LITHIUM AND CALCIUM/LITHIUM ANODES IN THIONYL CHLORIDE CELLS", JOURNAL OF POWER SOURCES, ELSEVIER SA, CH, vol. 15, no. 4, 1 août 1985 (1985-08-01), pages 239-244, XP001271109, ISSN: 0378-7753 divulguent des des anodes pour batterie comportant des alliages Li-Ca

Les dispositifs de stockage d'énergie sont classiquement des générateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des dispositifs de ce type peuvent être des générateurs électrochimiques lithium-air ou lithium-oxygène, qui se composent classiquement, au niveau de chaque cellule électrochimique de base, d'une électrode négative formée d'un matériau à base de lithium, en particulier, du lithium métallique et une électrode positive du type électrode à air séparées par un électrolyte conducteur d'ions lithium, l'oxygène de l'air constituant le matériau actif de l'électrode.

Le fonctionnement d'une cellule électrochimique d'un générateur électrochimique lithium-air ou lithium-oxygène se base, plus précisément, sur une réduction de l'oxygène à l'électrode positive par les ions Li⁺ présents dans l'électrolyte et provenant de l'électrode négative et sur une oxydation du lithium métallique à l'électrode négative, lors du processus de décharge, les réactions se produisant aux électrodes pouvant être symbolisées, lorsque l'électrolyte est un électrolyte non aqueux ou tout solide, par les équations électrochimiques suivantes :
*à l'électrode positive (électrode à air) :

   2Li⁺ + 2e⁻ + O_{2(g)} → Li₂O₂ (s) (2,91 V vs Li⁺ /Li)

   2Li⁺ + 2e⁻ + (1/2)O₂(g) → Li₂O(s) (3,10 V vs Li⁺/Li)
*à l'électrode négative:

   Li₍ₛ₎ → Li⁺ + e⁻

En variante, lorsque l'électrolyte est un électrolyte aqueux, la réaction de décharge à l'électrode positive est la suivante :

4Li⁺ + O₂ + 2H₂O → 4LiOH

L'oxygène, qui constitue le matériau actif de l'électrode positive, est un oxydant puissant, léger et qui présente pour avantage majeur d'être disponible gratuitement. Qui plus est, selon la conception du système, il est possible de ne pas le stocker dans le générateur électrochimique, c'est-à-dire de le prélever directement dans l'atmosphère par l'utilisation d'une électrode positive à air apte à prélever l'oxygène. Ce type de technologie peut donc développer des densités d'énergie de l'ordre de 11680 Wh/kg en théorie et supérieures à 1000 Wh/kg en pratique. La densité de puissance de ce type de technologie est, en revanche, moindre par rapport aux autres systèmes de générateurs, cette densité de puissance pour les générateurs électrochimiques lithium-air ou lithium-oxygène pouvant aller jusqu'à 500 W/kg, ce qui est à peu près de l'ordre de 50% de moins par rapport au maximum obtenu avec un accumulateur du type lithium-ion de puissance. Le domaine de fonctionnement en température de ce type de générateur est identique à celui obtenu avec la majorité des accumulateurs lithium-ion et est défini, de préférence, entre -20°C et +80°C selon les électrolytes et les sels utilisés.

Le lithium métallique, qui constitue classiquement, le matériau actif de l'électrode négative, est un matériau utilisable dans la plupart des systèmes tant son énergie massique et volumique est importante. En effet, le lithium présente une densité de 0,534 g/cm³ et une énergie massique de 3861 mAh/g ainsi qu'une densité d'énergie volumique de 2061 mAh/cm³. Ces valeurs restent très élevées par rapport à celles obtenues avec d'autres matériaux d'électrode négative, notamment grâce à la réaction Li → Li⁺ + e⁻, cette réaction impliquant l'échange d'un seul électron par atome de lithium, lequel est très léger et générant ainsi une quantité d'énergie importante pour un faible rapport volume/masse.

Le principal inconvénient lié à l'utilisation du lithium est dû, d'une part, à la formation possible de peroxyde de lithium, lors des processus de décharge et, d'autre part, à la formation éventuelle de dendrites de lithium, lors des processus de charge répétés, qui peuvent court-circuiter le générateur électrochimique et l'endommager.

Par ailleurs, le lithium peut poser des problèmes sécuritaires, du fait de sa température de fusion de 180°C et peut présenter des difficultés de manipulation pour la fabrication des électrodes négatives.

En effet, le lithium est un métal très réactif notamment lorsqu'il est soumis à un environnement comportant de l'eau, de l'azote et/ou de l'oxygène et présente une capacité d'adhérence sur tous types de métaux ou alliages, tels que l'inox, l'acier voire même sur certains polymères fluorés. Ainsi, il peut s'avérer difficile à manipuler et à mettre en forme, par exemple, par laminage ou extrusion sauf à prendre des précautions particulières, notamment en travaillant sous atmosphère neutre et dénuée d'humidité et/ou en travaillant avec des outils revêtus d'une couche de polymère non réactif, tel que du polyéthylène basse densité.

Enfin, pour une utilisation dans des générateurs électrochimiques du type lithium-air ou lithium-oxygène, il peut être intéressant d'utiliser pour constituer l'électrode négative des feuillards de lithium très fins, par exemple, d'une épaisseur allant de 10 à 50 µm en vue notamment d'augmenter la densité de puissance. Toutefois, une telle épaisseur est impossible à atteindre avec des laminoirs standards et lorsque de tels feuillards sont disponibles dans le commerce, ils sont très onéreux, même lorsqu'ils sont déjà prélaminés sur des collecteurs de courant (par exemple, un feuillard de cuivre).

Aussi, au vu des inconvénients mentionnés ci-dessus et notamment ceux relatifs à la difficulté de manipulation de lithium pour réaliser des électrodes négatives de faibles épaisseurs, les auteurs de la présente invention se sont fixé pour objectif de proposer un nouveau type de générateurs électrochimiques lithium-air ou lithium-oxygène comprenant une électrode négative spécifique.

Ainsi, l'invention a trait à un générateur électrochimique lithium-air ou lithium-oxygène comprenant au moins une cellule électrochimique comprenant une électrode positive, une électrode négative et un électrolyte conducteur d'ions lithium disposé entre ladite électrode négative et ladite électrode positive, caractérisé en ce que l'électrode négative comprend, comme matériau actif, un alliage de lithium et de calcium, l'alliage de lithium et de calcium étant un alliage de lithium comportant du calcium à hauteur de 2 à 34% atomique.

Avant d'entrer plus en détail dans l'exposé de cette invention, nous précisons les définitions suivantes.

Par générateur électrochimique lithium-air ou lithium-oxygène, on entend, classiquement, dans ce qui précède et ce qui suit, un générateur électrochimique qui est alimenté en oxygène, qui constitue le matériau actif de l'électrode positive, soit par le biais d'air (qui contient, par essence, de l'oxygène), le générateur électrochimique étant alors qualifié de générateur électrochimique lithium-air soit par de l'oxygène pur, le générateur électrochimique étant alors qualifié de générateur électrochimique lithium-oxygène. Lorsque le générateur électrochimique n'est pas rechargeable, il peut être qualifié de générateur électrochimique primaire (ou pile) et lorsqu'il est rechargeable, il peut être qualifié de générateur électrochimique secondaire (ou accumulateur).

Par électrode négative, on entend, classiquement, dans ce qui précède et ce qui suit, l'électrode qui fait office d'anode, quand le générateur électrochimique débite du courant (c'est-à-dire lorsqu'il est en processus de décharge) et qui fait office de cathode, lorsque le générateur électrochimique est en processus de charge (dans ce dernier cas, le générateur électrochimique peut être qualifié d'accumulateur, du fait qu'il peut être soumis à un processus de charge ou de décharge).

Par électrode positive, on entend, classiquement, dans ce qui précède et ce qui suit, l'électrode qui fait office de cathode, quand le générateur électrochimique débite du courant (c'est-à-dire lorsqu'il est en processus de décharge) et qui fait office d'anode lorsque le générateur électrochimique est en processus de charge (dans ce dernier cas, le générateur électrochimique peut être qualifié d'accumulateur, du fait qu'il peut être soumis à un processus de charge ou de décharge).

Par matériau actif de l'électrode négative, on entend, classiquement, dans ce qui précède et ce qui suit, le matériau qui est directement impliqué dans la réaction d'oxydation se déroulant au niveau de l'électrode négative, ce matériau actif étant, dans le cadre de cette invention, un alliage de lithium et de calcium.

L'électrode négative comportant un tel matériau actif peut être facilement préparée par lamination et présenter des épaisseurs faibles compatibles pour obtenir une amélioration de la densité de puissance.

Plus spécifiquement, l'électrode négative peut être constituée uniquement du matériau actif, qui est l'alliage de lithium et de calcium tel que mentionné ci-dessus.

D'un point de vue structural, l'électrode négative peut se présenter sous forme d'une feuille ou plaque présentant une épaisseur allant de 5 à 200 µm, plus spécifiquement de 20 à 100 µm.

Avantageusement, l'alliage de lithium et de calcium constitutif du matériau actif de l'électrode négative est un alliage comportant exclusivement du lithium et du calcium.

Plus spécifiquement, l'alliage de lithium et de calcium peut être, de préférence, un alliage de lithium comportant du calcium à hauteur de 2 à 34% atomique (ce qui signifie, en d'autres termes, que, lorsque l'alliage de lithium et de calcium comporte exclusivement du lithium et du calcium, le lithium est présent, dans l'alliage, à hauteur de 66 à 98% atomique), de préférence, de 2 à 15% atomique (ce qui signifie, en d'autres termes, que, lorsque l'alliage de lithium et de calcium comporte exclusivement du lithium et du calcium, le lithium est présent, dans l'alliage, à hauteur de 85 à 98% atomique).

Le calcium dans l'alliage de lithium et de calcium peut se présenter, en tout ou partie, sous forme de CaLi₂. Dans ce dernier cas, l'alliage de lithium et de calcium peut être considéré comme étant un matériau comprenant une matrice en lithium dont tout ou partie du calcium se trouve sous forme d'inclusions de CaLi₂ dans la matrice en lithium.

Les auteurs de la présente invention ont pu mettre en évidence qu'un tel alliage se lamine facilement et présente de bonnes propriétés mécaniques notamment en termes de résistance à la traction, notamment pour des épaisseurs telles que définies ci-dessus.

Par % atomique, on entend, classiquement, dans ce qui précède et ce qui suit, le rapport correspondant à (nombre total d'atomes de calcium/nombre total d'atomes de l'alliage)^{∗}100.

Avantageusement, l'électrode négative peut être autosupportée, c'est-à-dire qu'elle ne nécessite pas d'être apposée sur un support pour être utilisée dans le générateur électrochimique de l'invention et, plus spécifiquement, qu'elle ne nécessite pas d'être apposée sur un collecteur de courant (ce qui signifie, autrement dit, que le générateur électrochimique est dénué de collecteur de courant au niveau de l'électrode négative). En variante, elle peut être associée à un support, par exemple, du type collecteur de courant, qui peut être un feuillard ou une grille en au moins un élément métallique conducteur de l'électricité, tel que du cuivre, du nickel, de l'aluminium, de l'inox.

L'électrode positive du générateur électrochimique de l'invention est, classiquement, une électrode à air ou à oxygène.

Au niveau de cette électrode à air ou à oxygène, lorsque l'électrolyte est un électrolyte non aqueux ou tout solide, l'oxygène est réduit lors de la décharge de la cellule selon les équations électrochimiques suivantes :

2Li⁺ + 2e⁻ + O₂(g) → Li₂O₂(s)

2Li⁺ + 2e⁻ + (1/2)O₂(g) → Li₂O(s)

L'électrode à air ou à oxygène est destinée à être en contact direct avec de l'oxygène, en vue de permettre la réduction de celui-ci et doit donc, classiquement, présenter des sites catalytiques et permettre l'échange d'électrons, ce qui se traduit par les propriétés suivantes :
- une diffusion de l'oxygène sous forme gazeuse ;
- une conductivité électronique ;
- une surface catalytique importante ;
- une bonne mouillabilité par l'électrolyte ; et
- une bonne tenue mécanique.

D'un point de vue structural, une électrode positive apte à entrer dans la constitution d'un générateur électrochimique conforme à l'invention peut comprendre :
- au moins un matériau conducteur électronique ;
- éventuellement au moins un catalyseur; et
- éventuellement, au moins un liant.

Le matériau conducteur électronique peut être, de préférence, un matériau carboné, à savoir un matériau comprenant du carbone à l'état élémentaire.

On peut citer comme matériau carboné :
- du graphite ;
- des billes de mésocarbone ;
- des fibres de carbone ;
- du noir de carbone, tel que du noir d'acétylène, du noir tunnel, du noir de fourneau, du noir de lampe, du noir d'anthracène, du noir de charbon, du noir de gaz, du noir thermique) ;
- du graphène ;
- des nanotubes de carbone ; et
- des mélanges de ceux-ci.

Ledit matériau carboné peut être présent à hauteur de 80 à 100% massique de la masse totale de l'électrode.

En particulier, l'électrode positive peut comprendre, comme matériau conducteur électronique, un matériau carboné à haute surface spécifique (l'électrode positive pouvant être même exclusivement, composée d'un tel matériau), tel qu'un tissu de fibres de carbone ou de nanotubes de carbone.

Le matériau conducteur électronique peut être également une céramique conductrice électronique appartenant à la familles des nitrures d'élément(s) de transition, comme TiN, des carbures d'élément(s) de transition et/ou d'élément(s) métalloïde(s), comme TiC, SiC, des carbonitrures d'élément(s) de transition, comme TiCN, des oxydes simples d'élément(s) de transition, comme TiO, ZnO, Cu₂O ou des oxydes mixtes d'élément(s) de transition comme NiCo₂O₄, MnCo₂O₄.

Il n'est pas exclu que le matériau conducteur électronique puisse contenir à la fois un matériau carboné tel que mentionné ci-dessus et une céramique conductrice électronique, telle que mentionnée ci-dessus.

Lorsqu'il est présent, le catalyseur susmentionné est, d'un point de vue fonctionnel, un catalyseur apte à accélérer les réactions électrochimiques se produisant au niveau de l'électrode à air ou à oxygène (que l'on soit en processus de décharge ou de charge) et, également, apte à augmenter la tension opérationnelle, à laquelle ces réactions électrochimiques ont lieu.

Un catalyseur répondant à ces spécificités peut être :
- un catalyseur constitué d'un métal de transition au degré d'oxydation 0, tel que le cobalt et plus spécifiquement, un métal noble au degré d'oxydation 0 comme le platine, l'or, le palladium, le ruthénium ou des alliages de ceux-ci, tel qu'un alliage Pt-Au ;
- un catalyseur comprenant un oxyde simple de ruthénium, tel que RuO₂, un oxyde simple de manganèse, tel que MnO₂, Mn₂O₃, un oxyde simple de fer, tel que Fe₃O₄, Fe₂O₃, un oxyde simple de cobalt, tel que Co₃O₄ ou un oxyde simple de cuivre, tel que CuO ;

- un catalyseur comprenant un oxyde mixte de cobalt, tel que CoFe₂O₄, un oxyde mixte de manganèse, tel que LaMnO₃ ou un oxyde mixte de nickel, tel LaNiO₃ ; ou
- des mélanges de ceux-ci.

Lorsqu'il est présent, le catalyseur peut être présent, dans l'électrode positive, en un teneur massique allant jusqu'à 20% en masse par rapport à la masse totale de l'électrode positive.

Pour assurer une cohésion de l'électrode positive, l'électrode positive peut comprendre un ou plusieurs liants, en particulier, un ou plusieurs liants polymériques.

Parmi les liants polymériques susceptibles d'être utilisés, on peut citer :
*les (co)polymères fluorés éventuellement conducteurs de protons, tels que :
   - les polymères fluorés, tels qu'un polytétrafluoroéthylène (connu sous l'abréviation PTFE), un polyfluorure de vinylidène (connu sous l'abréviation PVDF) ;
   - les copolymères fluorés, tels qu'un poly(fluorure de vinylidèneco-hexafluoropropène) (connu sous l'abréviation PVDF-HFP) ;
   - les polymères fluorés conducteurs de protons, tels que le Nafion® ;
*les polymères élastomères, tels qu'un copolymère styrènebutadiène (connu sous l'abréviation SBR), un copolymère éthylène-propylènemonomère diénique (connu sous l'abréviation EPDM) ;
*les polymères de la famille des alcools polyvinyliques ;
*les polymères cellulosiques, tel qu'une carboxyméthylcellulose sodique ; et
*les mélanges de ceux-ci.

De préférence, le liant utilisé est un liant à base d'un polymère fluoré, tel qu'un polytétrafluoroéthylène, un polyfluorure de vinylidène ou les mélanges de ceux-ci, ce type de liant permettant l'obtention d'un bon réseau percolant.

Outre la présence d'au moins un matériau conducteur électronique, éventuellement d'au moins un catalyseur et éventuellement d'au moins un liant, l'électrode positive être associée à un support, destiné, comme son nom l'indique, à supporter les ingrédients susmentionnés, ce support pouvant, en outre, contribuer à assurer une bonne tenue mécanique de l'électrode et une bonne conduction électronique (ce support pouvant être qualifié de support collecteur de courant) et permettre la diffusion des gaz, en particulier, l'oxygène. On peut ainsi qualifier ce type d'électrode supportée.

Ce support peut se présenter sous forme d'une mousse, d'une grille ou encore d'un support fibreux et peut être en un matériau comprenant un métal ou un alliage métallique ou encore en un matériau carboné.

Il peut s'agir, tout particulièrement, d'un support en carbone, d'un support en titane, d'un support en palladium, d'un support en cuivre, d'un support en or, d'un support en aluminium, d'un support en nickel ou d'un support en acier inoxydable.

L'électrolyte destiné à entrer dans la constitution des générateurs électrochimiques de l'invention peut être un électrolyte liquide aqueux (c'est-à-dire d'au moins un solvant est de l'eau) ou non aqueux (c'est-à-dire ne comprenant pas d'eau).

Plus spécifiquement, lorsque l'électrolyte est un électrolyte liquide aqueux, il peut comprendre :
- comme unique solvant, de l'eau ;
- au moins un sel de lithium, tel que LiOH, LiCI, LiH₂PO₄, Li₃PO₄, LiNO₃ ;
- éventuellement, au moins un acide minéral, tel que HClO₃, HClO₄, HNO₃, H₂SO₄, HBr, HCI ou organique, tel que l'acide formique HCOOH, l'acide acétique CH₃COOH.

Lorsque l'électrolyte est un électrolyte liquide non aqueux, il peut comprendre :
- comme solvant(s), un ou plusieurs solvants organiques choisis parmi les solvants carbonates, les solvants éthers, les solvants sulfones, les solvants sulfoxides, les solvants lactones, les solvants lactames, les solvants nitriles, les solvants fluorés et les mélanges de ceux-ci ;
- au moins un sel de lithium ;
- éventuellement un additif autre qu'un sel de lithium.

A titre d'exemples, le sel de lithium peut être choisi dans le groupe constitué par LiPF₆, LiClO₄, LiBF₄, LiAsF₆, LiSbF₆, LiAlCl₄, LiGaCl₄, LiCF₃SO₃, LiC(SO₂CF₃)₃, le *bis*(trifluorométhylsulfonyl)imidure de lithium (connu sous l'abréviation LiTFSI) LiN[SO₂CF₃]₂, LiSCN, le nitrate de lithium LiNO₃, le *bis*(oxalato)borate de lithium (connu sous l'abréviation LIBOB), le *bis*(fluorosulfonyl)imidure de lithium (connu sous l'abréviation LiFSI), LiPF₃(CF₂CF₃)₃ (connu sous l'abréviation LiFAP), le trifluorométhanesulfonate de lithium LiCF₃SO₃ (connu sous l'abréviation LiTf), le fluorosulfonate de lithium LiSO₃F, LiC₆F₅SO₃, LiO₃SCF₂CF₃, LiO₂CCF₃,LiB(C₆H₅)₄ et les mélanges de ceux-ci.

Le sel de lithium peut être compris, dans l'électrolyte, à hauteur de 0,3 M à 2 M.

Comme solvant organique appartenant à la famille des solvants carbonates, on peut citer le carbonate d'éthylène (connu sous l'abréviation EC), le carbonate de propylène (connu sous l'abréviation PC), le carbonate de diméthyle (connu sous l'abréviation DMC), le carbonate de diéthyle (connu sous l'abréviation DEC) et les mélanges de ceux-ci.

Comme solvant organique appartenant à la famille des solvants éthers, on peut citer le diméthoxyéthane (connu sous l'abréviation DME), le tétraglyme ou tétraéthylèneglycoldiméthyléther (connu sous l'abréviation TEGDME), le méthoxybenzène.

Comme solvant organique appartenant à la famille des solvants sulfones, on peut citer l'éthylméthylsulfone (connu sous l'abréviation EMS), la triméthylènesulfone (connu sous l'abréviation TriMS), la 1-méthyltriméthylènesulfone (connu sous l'abréviation MTS), l'éthyl-*sec-*butylsulfone (connu sous l'abréviation EiBS), l'éthyl-*iso*-propylsulfone (connu sous l'abréviation EiPS) et également le 3,3,3-trifluoropropylméthylsulfone (connu sous l'abréviation FPMS).

Comme solvant organique appartenant à la famille des solvants sulfoxides, on peut citer le diméthylsulfoxide (connu sous l'abréviation DMSO).

Comme solvant organique appartenant à la famille des solvants lactones, on peut citer la γ-butyrolactone, la γ-valérolactone, la δ-valérolactone, la ε-caprolactone, la γ-caprolactone.

Comme solvant organique appartenant à la famille des solvants lactames, on peut citer la N-méthyl-2-pyrrolidone (connue sous l'abréviation NMP).

Comme solvant organique appartenant à la famille des solvants nitriles, on peut citer l'acétonitrile.

Comme solvant organique appartenant à la famille des solvants fluorés, on peut citer la perfluorodécaline, le perfluorooctanol.

Le solvant peut être utilisé sous forme d'un seul solvant ou d'un mélange de solvants distincts (pouvant former ainsi un solvant binaire ou un solvant ternaire).

Par exemple, le solvant peut consister en un mélange d'au moins un solvant fluoré et d'au moins un solvant carbone. Plus spécifiquement, il peut s'agir d'un solvant ternaire pouvant comprendre trois solvants, un exemple spécifique étant le solvant ternaire consistant en un mélange comprenant de la perfluorodécaline, du perfluorooctanol et du carbonate d'éthylène.

Comme additif autre qu'un sel de lithium, on peut citer le carbonate de fluoroéthylène (connu sous l'abréviation FEC), du 2,2,6,6-tétraméthylpipéridinyloxyl (connu sous l'abréviation TEMPO), de la polydopamine.

L'électrolyte liquide susmentionné peut être amené, dans les cellules électrochimiques des générateurs électrochimiques de l'invention, à imprégner un séparateur, lequel est disposé entre l'électrode positive et l'électrode négative de la cellule électrochimique.

Ce séparateur peut être en un matériau poreux apte à accueillir dans sa porosité l'électrolyte liquide.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 à 300 µm.

L'électrolyte peut être également un liquide ionique, par exemple, du *bis*(trifluorométhylsulfonyl)imidure de 1-méthyl-1-propylpipéridinium, du *bis*(trifluorométhylsulfonyl)imidure de 1-n-butyl-1-méthylpyrrolidinium et des mélanges de ceux-ci.

L'électrolyte peut consister également en un électrolyte solide, par exemple, une membrane céramique conductrice d'ions lithium, dénommée classiquement LISICON (correspondant à la terminologie anglaise Lithium Super Ionic Conductor), cette membrane céramique pouvant être du type perovskite, tel que (La,Li)TiO₃ (connu sous l'abréviation LLTO), du type garnet, tel que Li₅La₃Ta₂O₁₂, Li₆La₃Zr₂O_{11,5}, du type phosphate, tel que Li₁₊ₓAlₓGe₂₋ₓ(PO₄)₃ avec 0<x<0,8 (connu sous l'abréviation LAGP), Li₁₊ₓTi₂₋ₓAlₓ(PO₄)₃ avec 0,25<x<0,3 et Li_{1+x+y}Ti₂₋ₓAlₓSi_{y}(PO₄)_{3-y} avec 0,2<x<0,25 et 0<y<0,05 (connu sous l'abréviation LTAP).

L'électrolyte peut être également un électrolyte polymère comprenant au moins un polymère résultant de la polymérisation d'un ou plusieurs monomères, tels que le fluorure de vinylidène, l'hexafluoropropylène, et comprenant au moins un sel de lithium, tel qu'au moins un de ceux mentionnés ci-dessus au sujet des électrolytes liquides non aqueux.

Les générateurs électrochimiques de l'invention peuvent être inclus dans une enceinte étanche alimentée en air ou oxygène en vue de son fonctionnement.

Les générateurs électrochimiques de l'invention peuvent comprendre, en outre, une membrane sélective à l'oxygène et qui peut permettre d'acheminer sélectivement l'oxygène vers l'électrode positive. Cette membrane peut être constituée d'un ou plusieurs polymères, tels qu'un polydiméthylsiloxane (connu sous l'abréviation PDMS), un polysulfone (connu sous l'abréviation PS), un polyacrylonitrile (connu sous l'abréviation PAN), un acétate de cellulose, une polyéthersulfone (connu sous l'abréviation PES), un polyétherimide (connu sous l'abréviation PEI), un polyamide (connu sous l'abréviation PA), un polyfluorure de vinylidène (connu sous l'abréviation PVDF), un polytéréphtalate d'éthylène (connu sous l'abréviation PET) ou des mélanges de ceux-ci.

Un générateur électrochimique spécifique à l'invention est un générateur comprenant au moins une cellule électrochimique comprenant :
- une électrode négative constituée d'une feuille en alliage de lithium et de calcium comprenant une teneur en calcium de 2% atomique, ladite feuille présentant une épaisseur de 100 µm ;
- une électrode positive constituée d'un tissu de fibres de carbone ; et
- un séparateur poreux disposé entre ladite électrode négative et ladite électrode positive, ledit séparateur étant imprégné d'un électrolyte comprenant un sel de lithium LiTFSI dans un mélange de trois solvants comprenant de la perfluorodécaline, du perfluorooctanol et du carbonate de propylène.

Les générateurs électrochimiques de l'invention peuvent être réalisés par des techniques classiques à la portée de l'homme du métier, par exemple, par empilements des différents éléments constitutifs du générateur électrochimique (à savoir, électrode négative, électrode positive et séparateur), cet empilement pouvant être maintenu dans un boîtier. L'alliage constitutif de l'électrode négative peut être réalisé par fusion de lithium et de calcium, par exemple, sur une plaque chauffante, à une température pouvant aller de 140 à 500°C, sous une atmosphère neutre (par exemple, une atmosphère d'argon) suivie, après mélange, d'une trempe du mélange fondu pour former rapidement l'alliage. L'alliage ainsi obtenu peut être mis sous forme d'une plaque ou feuille par laminage en vue d'entrer dans la constitution de l'électrode négative.

L'invention va maintenant être décrite, en référence à l'exemple suivant, donné à titre indicatif et non limitatif.

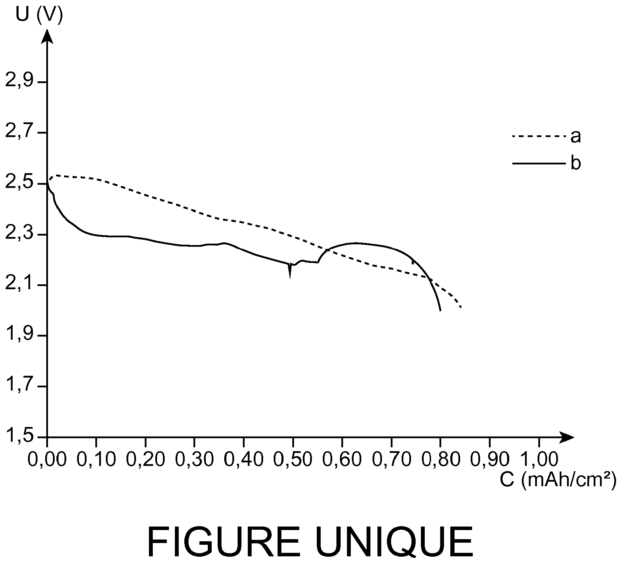

### BRÈVE DESCRIPTION DE LA FIGURE UNIQUE

La figure unique est un graphique illustrant l'évolution de la tension de décharge U (en V) sous 30 µA en fonction de la capacité surfacique C (en mAh par cm² d'électrode positive) pour le générateur électrochimique conforme à l'invention (courbe a) et pour le générateur électrochimique non conforme à l'invention (courbe b) de l'exemple exposé ci-dessous.

### EXPOSÉ DÉTAILLÉ D'UN MODE DE RÉALISATION PARTICULIER

### EXEMPLE

L'exemple suivant illustre un générateur électrochimique lithium-air sous forme d'une pile-bouton comportant :
- une électrode négative constituée d'un disque de 16 mm de diamètre et de 100 µm d'épaisseur et composé d'un alliage de lithium et de calcium à hauteur de 2% atomique de calcium ;
- une électrode positive constituée d'un disque de 14 mm de diamètre et de 200 µm d'épaisseur composé d'un tissu de fibres de carbone du type Freudenberg H2315 ;
- entre l'électrode négative et l'électrode positive, un séparateur du type Celgard 2400® sous forme d'un disque de 16 mm de diamètre, ledit séparateur étant imprégné d'un électrolyte (300 µL) constitué d'un mélange de solvants perfluorodécaline/perfluorooctanol/carbonate de propylène en proportions massiques respectives 2,55/2,4/0,45 et un sel de lithium LiTFSI 1M.

A titre comparatif, un autre générateur électrochimique lithium-air non conforme à l'invention a été réalisé dans cet exemple, ce générateur électrochimique répondant aux mêmes spécificités que celle de l'invention, si ce n'est que l'électrode négative est en lithium pur.

Ces deux générateurs électrochimiques sont alimentés par un débit d'oxygène de 0,6 mL/min à une pression de 1 bar.

Pour ces deux générateurs électrochimiques, il est déterminé l'évolution de la tension de décharge U (en V) sous 30 µA en fonction de la capacité surfacique C (en mAh par cm² d'électrode positive), les résultats étant reportés sur la figure unique jointe en annexe (courbe a) pour le générateur électrochimique conforme à l'invention et courbe b) pour le générateur électrochimique non conforme à l'invention).

Pour le générateur électrochimique conforme à l'invention, le potentiel de décharge est similaire à celui du générateur électrochimique utilisant une électrode négative en lithium uniquement, ce qui démontre que l'électrode comprenant du calcium est aussi fonctionnelle qu'une électrode de lithium dans un tel système.

En outre, la présence de calcium dans l'alliage de lithium constitutif de l'électrode négative contribue à rendre l'alliage plus facile à laminer que du lithium pur, ce qui permet d'envisager l'utilisation d'un tel alliage pour constituer des électrodes négatives plus fines et ainsi des surfaces développées plus importantes, ce qui peut s'avérer un atout majeur dans les générateurs électrochimiques destinés à des applications de puissance.

## Revendications

1. Générateur électrochimique lithium-air ou lithium-oxygène comprenant au moins une cellule électrochimique comprenant une électrode positive, une électrode négative et un électrolyte conducteur d'ions lithium disposé entre ladite électrode négative et ladite électrode positive, **caractérisé en ce que** l'électrode négative comprend, comme matériau actif, un alliage de lithium et de calcium, l'alliage de lithium et de calcium étant un alliage de lithium comportant du calcium à hauteur de 2 à 34% atomique.

2. Générateur électrochimique lithium-air ou lithium-oxygène selon la revendication 1, dans lequel l'électrode négative est constituée uniquement du matériau actif, qui est l'alliage de lithium et de calcium.

3. Générateur électrochimique lithium-air ou lithium-oxygène selon la revendication 1 ou 2, dans lequel l'électrode négative se présente sous forme d'une feuille ou plaque présentant une épaisseur allant de 5 à 200 µm.

4. Générateur électrochimique lithium-air ou lithium-oxygène selon l'une quelconque des revendications précédentes, dans lequel l'alliage de lithium et de calcium comporte exclusivement du lithium et du calcium.

5. Générateur électrochimique lithium-air ou lithium-oxygène selon l'une quelconque des revendications précédentes, dans lequel l'alliage de lithium et de calcium est un alliage de lithium comportant du calcium à hauteur de 2 à 15% atomique.

6. Générateur électrochimique lithium-air ou lithium-oxygène selon l'une quelconque des revendications précédentes, dans lequel le calcium dans l'alliage de lithium et de calcium se présente, en tout ou partie, sous forme de CaLi₂.

7. Générateur électrochimique lithium-air ou lithium-oxygène selon l'une quelconque des revendications précédentes, dans lequel l'électrode négative est autosupportée.

8. Générateur électrochimique lithium-air ou lithium-oxygène selon l'une quelconque des revendications précédentes, dans lequel l'électrode positive est une électrode à air ou à oxygène.

9. Générateur électrochimique lithium-air ou lithium-oxygène selon l'une quelconque des revendications précédentes, dans lequel l'électrode positive comprend :
- au moins un matériau conducteur électronique ;
- éventuellement au moins un catalyseur; et
- éventuellement, au moins un liant.

10. Générateur électrochimique lithium-air ou lithium-oxygène selon la revendication 9, dans lequel le matériau conducteur électronique est un matériau carboné choisi parmi du graphite, des billes de mésocarbone, des fibres de carbone, du noir de carbone, du graphène, des nanotubes de carbone et des mélanges de ceux-ci.

11. Générateur électrochimique lithium-air ou lithium-oxygène selon la revendication 9 ou 10, dans lequel le catalyseur est :
- un catalyseur constitué d'un métal de transition au degré d'oxydation 0, tel que le cobalt et plus spécifiquement, un métal noble au degré d'oxydation 0 comme le platine, l'or, le palladium, le ruthénium ou des alliages de ceux-ci, tel qu'un alliage Pt-Au ;
- un catalyseur comprenant un oxyde simple de ruthénium, tel que RuO₂, un oxyde simple de manganèse, tel que MnO₂, Mn₂O₃, un oxyde simple de fer, tel que Fe₃O₄, Fe₂O₃, un oxyde simple de cobalt, tel que Co₃O₄ ou un oxyde simple de cuivre, tel que CuO ;
- un catalyseur comprenant un oxyde mixte de cobalt, tel que CoFe₂O₄, un oxyde mixte de manganèse, tel que LaMnO₃, un oxyde mixte de nickel, tel LaNiO₃ ; ou
- des mélanges de ceux-ci.

12. Générateur électrochimique lithium-air ou lithium-oxygène selon l'une quelconque des revendications 9 à 11, dans lequel le liant est un liant polymérique.

13. Générateur électrochimique lithium-air ou lithium-oxygène selon l'une quelconque des revendications précédentes, dans lequel l'électrolyte est un électrolyte liquide aqueux ou non aqueux, un liquide ionique, un électrolyte solide ou un électrolyte polymère.

14. Générateur électrochimique lithium-air ou lithium-oxygène selon l'une quelconque des revendications précédentes, dans lequel l'électrolyte est un électrolyte liquide non aqueux.

15. Générateur électrochimique lithium-air ou lithium-oxygène selon l'une quelconque des revendications précédentes, dans lequel l'électrolyte est un électrolyte liquide non aqueux, qui comprend :
- comme solvant(s), un ou plusieurs solvants organiques choisis parmi les solvants carbonates, les solvants éthers, les solvants sulfones, les solvants sulfoxides, les solvants lactones, les solvants lactames, les solvants nitriles, les solvants fluorés et les mélanges de ceux-ci ;
- au moins un sel de lithium ;
- éventuellement un additif autre qu'un sel de lithium.

## Patentansprüche

1. Elektrochemischer Lithium-Luft- oder Lithium-Sauerstoff-Generator, umfassend mindestens eine elektrochemische Zelle, die eine positive Elektrode, eine negative Elektrode und einem Lithiumionen-leitenden Elektrolyten umfasst, der zwischen der negativen Elektrode und der positiven Elektrode angeordnet ist, **dadurch gekennzeichnet, dass** die negative Elektrode als aktives Material eine Lithium-Calcium-Legierung umfasst, wobei die Lithium-Calcium-Legierung eine Lithiumlegierung ist, die Calcium in einer Menge von 2 bis 34 Atom-% umfasst.

2. Elektrochemischer Lithium-Luft- oder Lithium-Sauerstoff-Generator nach Anspruch 1, wobei die negative Elektrode nur aus dem aktiven Material besteht, das die Lithium-Calcium-Legierung ist.

3. Elektrochemischer Lithium-Luft- oder Lithium-Sauerstoff-Generator nach Anspruch 1 oder 2, wobei die negative Elektrode in Form eines Blechs oder einer Platte mit einer Dicke von 5 bis 200 µm vorliegt.

4. Elektrochemischer Lithium-Luft- oder Lithium-Sauerstoff-Generator nach einem der vorhergehenden Ansprüche, wobei die Lithium-Calcium-Legierung ausschließlich Lithium und Calcium umfasst.

5. Elektrochemischer Lithium-Luft- oder Lithium-Sauerstoff-Generator nach einem der vorhergehenden Ansprüche, wobei die Lithium-Calcium-Legierung eine Lithiumlegierung ist, die Calcium in einer Menge von 2 bis 15 Atom-% umfasst.

6. Elektrochemischer Lithium-Luft- oder Lithium-Sauerstoff-Generator nach einem der vorhergehenden Ansprüche, wobei das Calcium in der Lithium-Calcium-Legierung ganz oder teilweise in Form von CaLi₂ vorliegt.

7. Elektrochemischer Lithium-Luft- oder Lithium-Sauerstoff-Generator nach einem der vorhergehenden Ansprüche, wobei die negative Elektrode selbsttragend ist.

8. Elektrochemischer Lithium-Luft- oder Lithium-Sauerstoff-Generator nach einem der vorhergehenden Ansprüche, wobei die positive Elektrode eine Luft- oder Sauerstoffelektrode ist.

9. Elektrochemischer Lithium-Luft- oder Lithium-Sauerstoff-Generator nach einem der vorhergehenden Ansprüche, wobei die positive Elektrode umfasst:
- mindestens ein elektronisch leitfähiges Material;
- gegebenenfalls mindestens einen Katalysator; und
- gegebenenfalls mindestens ein Bindemittel.

10. Elektrochemischer Lithium-Luft- oder Lithium-Sauerstoff-Generator nach Anspruch 9, wobei das elektronisch leitende Material ein kohlenstoffhaltiges Material ist, das aus Graphit, Mesokohlenstoffkügelchen, Kohlenstofffasern, Ruß, Graphen, Kohlenstoffnanoröhren und Mischungen davon ausgewählt ist.

11. Elektrochemischer Lithium-Luft- oder Lithium-Sauerstoff-Generator nach Anspruch 9 oder 10, wobei der Katalysator ist:
- ein Katalysator, der aus einem Übergangsmetall im Oxidationszustand 0, wie Kobalt und insbesondere einem Edelmetall im Oxidationszustand 0, wie Platin, Gold, Palladium, Ruthenium oder Legierungen davon, wie eine Pt-Au-Legierung, gebildet ist;
- ein Katalysator, der ein einfaches Oxid von Ruthenium, wie RuO₂, ein einfaches Oxid von Mangan, wie MnO₂, Mn₂O₃, ein einfaches Oxid von Eisen, wie Fe₃O₄, Fe₂O₃, ein einfaches Oxid von Kobalt, wie Co₃O₄ oder ein einfaches Oxid von Kupfer, wie CuO umfasst;
- ein Katalysator, der ein Mischoxid von Kobalt, wie CoFe₂O₄, ein Mischoxid von Mangan, wie LaMnO₃, ein Mischoxid von Nickel, wie LaNiO₃, umfasst; oder
- Mischungen davon.

12. Elektrochemischer Lithium-Luft- oder Lithium-Sauerstoff-Generator nach einem der Ansprüche 9 bis 11, wobei das Bindemittel ein polymeres Bindemittel ist.

13. Elektrochemischer Lithium-Luft- oder Lithium-Sauerstoff-Generator nach einem der vorhergehenden Ansprüche, wobei der Elektrolyt ein wässriger oder nichtwässriger flüssiger Elektrolyt, eine ionische Flüssigkeit, ein Festelektrolyt oder ein Polymerelektrolyt ist.

14. Elektrochemischer Lithium-Luft- oder Lithium-Sauerstoff-Generator nach einem der vorhergehenden Ansprüche, wobei der Elektrolyt ein nichtwässriger flüssiger Elektrolyt ist.

15. Elektrochemischer Lithium-Luft- oder Lithium-Sauerstoff-Generator nach einem der vorhergehenden Ansprüche, wobei der Elektrolyt ein nichtwässriger flüssiger Elektrolyt ist, umfassend:
- als Lösungsmittel ein oder mehrere organische Lösungsmittel, ausgewählt aus Carbonat-Lösungsmitteln, Ether-Lösungsmitteln, Sulfon-Lösungsmitteln, Sulfoxid-Lösungsmitteln, Lacton-Lösungsmitteln, Lactam-Lösungsmitteln, Nitril-Lösungsmitteln, fluorierten Lösungsmitteln und Gemischen davon;
- mindestens ein Lithiumsalz;
- gegebenenfalls einen anderen Zusatzstoff als ein Lithiumsalz.

## Claims

1. Lithium-air or lithium-oxygen electrochemical generator comprising at least one electrochemical cell comprising a positive electrode, a negative electrode and an electrolyte conducting lithium ions disposed between said negative electrode and said positive electrode, **characterised in that** the negative electrode comprises, as active material, a lithium and calcium alloy, the lithium and calcium alloy being a lithium alloy comprising calcium to the extent of 2% to 34% atomic.

2. Lithium-air or lithium-oxygen electrochemical generator according to claim 1, wherein the negative electrode consists solely of the active material, which is the lithium and calcium alloy.

3. Lithium-air or lithium-oxygen electrochemical generator according to claim 1 or 2, wherein the negative electrode is in the form of a sheet or plate having a thickness ranging from 5 to 200 µm.

4. Lithium-air or lithium-oxygen electrochemical generator according to any one of the preceding claims, wherein the lithium and calcium alloy comprises solely lithium and calcium.

5. Lithium-air or lithium-oxygen electrochemical generator according to any one of the preceding claims, wherein the lithium and calcium alloy is a lithium alloy comprising calcium to the extent of 2% to 15% atomic.

6. Lithium-air or lithium-oxygen electrochemical generator according to any one of the preceding claims, wherein the calcium in the lithium and calcium alloy is wholly or partly in the form of CaLi₂.

7. Lithium-air or lithium-oxygen electrochemical generator according to any one of the preceding claims, wherein the negative electrode is self-supporting.

8. Lithium-air or lithium-oxygen electrochemical generator according to any one of the preceding claims, wherein the positive electrode is an air or oxygen electrode.

9. Lithium-air or lithium-oxygen electrochemical generator according to any one of the preceding claims, wherein the positive electrode comprises:
- at least one electron-conducting material;
- optionally at least one catalyst; and
- optionally at least one binder.

10. Lithium-air or lithium-oxygen electrochemical generator according to claim 9, wherein the electron conducting material is a carbon material chosen from graphite, mesocarbon beads, carbon fibres, carbon black, graphene, carbon nanotubes and mixtures thereof.

11. Lithium-air or lithium-oxygen electrochemical generator according to claim 9 or claim 10, wherein the catalyst is:
- a catalyst consisting of a transition metal with a degree of oxidation 0, such as cobalt, and more specifically a noble metal with a degree of oxidation 0 such as platinum, gold, palladium, ruthenium or alloys thereof, such as a Pt-Au alloy;
- a catalyst comprising a simple ruthenium oxide such as RuO₂, a simple manganese oxide such as MnO₂ or Mn₂O₃, a simple iron oxide such as Fe₃O₄ or Fe₂O₃, a simple cobalt oxide such as Co₃O₄ or a simple copper oxide such as CuO;
- a catalyst comprising a mixed cobalt oxide such as CoFe₂O₄, a mixed manganese oxide such as LaMnO₃ or a mixed nickel oxide such as LaNiO₃; or
- mixtures thereof.

12. Lithium-air or lithium-oxygen electrochemical generator according to any one of the claims 9 to 11, wherein the binder is a polymeric binder.

13. Lithium-air or lithium-oxygen electrochemical generator according to any one of the preceding claims, wherein the electrolyte is an aqueous or non-aqueous liquid electrolyte, an ionic liquid, a solid electrolyte or a polymer electrolyte.

14. Lithium-air or lithium-oxygen electrochemical generator according to any one of the preceding claims, wherein the electrolyte is a non-aqueous liquid electrolyte.

15. Lithium-air or lithium-oxygen electrochemical generator according to any one of the preceding claims, wherein the electrolyte is a non-aqueous liquid electrolyte, which comprises:
- as solvent(s), one or more organic solvents chosen from carbonate solvents, ether solvents, sulfone solvents, sulfoxide solvents, lactone solvents, lactam solvents, nitrile solvents, fluorinated solvents and mixtures thereof;
- at least one lithium salt;
- optionally an additive other than a lithium salt.
